(19) **Europäisches Patentamt**
**European Patent Office**
**Office européen des brevets**

(11) **EP 4 776 193 A1**

(12) **EUROPEAN PATENT APPLICATION**

(43) Date of publication:
**15.07.2026 Bulletin 2026/29**

(21) Application number: **25221095.0**

(22) Date of filing: **05.12.2025**

(51) International Patent Classification (IPC):
**G06N 20/20** (2019.01)    **G06N 7/01** (2023.01)

(52) Cooperative Patent Classification (CPC):
**G06N 20/20; G06N 7/01**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **08.01.2025 IN 202521001797**

(71) Applicant: **Tata Consultancy Services Limited Maharashtra (IN)**

(72) Inventors:
• **MOHITE, Jayantrao**
  **400606 Thane (West), Maharashtra (IN)**
• **SAWANT, Suryakant Ashok**
  **411057 Pune, Maharashtra (IN)**
• **SINGH, Dineshkumar Jang Bahadur**
  **400606 Thane (West), Maharashtra (IN)**
• **PANDIT, Ankur**
  **452018 Indore, Madhya Pradesh (IN)**
• **PAPPULA, Srinivasu**
  **500081 Hyderabad, Telangana (IN)**

(74) Representative: **Goddar, Heinz J.**
**Boehmert & Boehmert**
**Anwaltspartnerschaft mbB**
**Pettenkoferstrasse 22**
**80336 München (DE)**

(54) **FIRE AND SOURCE PREDICTION USING DYNAMIC WEIGHTING-BASED ENSEMBLE MODELING AND PROBABILISTIC CAUSE DETERMINATION**

(57)    In traditional ensemble modeling multiple individual models are trained on the same set of input variables without considering variations in spatial and temporal resolutions. A method and system for dynamic forest fire prediction and source prediction is proposed using dynamic weighting-based ensemble modeling and probabilistic cause determination. The adaptive ensemble model dynamically re-weights multiple base models, each optimized for different data scales, to provide accurate predictions based on the spatial and temporal granularity of incoming data. The method enables adjusting fire predictions probabilities due to shifts in the feature space caused by phenological and environmental changes. Key environmental variables are continuously monitored for recalibrating model predictions using shift detection algorithms, ensuring long-term accuracy without frequent retraining. Probabilistic determination is applied for likely causes of forest fires, which integrates data from various sources to provide a nuanced, data-driven understanding of the factors contributing to fire outbreaks.

FIG. 2B

## Description

CROSS-REFERENCE TO RELATED APPLICATIONS AND PRIORITY

The present application claims priority to Indian application no. 202521001797, filed on January 08, 2025.

TECHNICAL FIELD

The embodiments herein generally relate to the field of ensemble modeling and, more particularly, to a method and system for dynamic forest fire and source or cause prediction using dynamic weighting-based ensemble modeling and probabilistic cause determination.

BACKGROUND

Given the significant threat that forest fires pose to ecosystems, human life, and infrastructure, effective monitoring and forecasting have become indispensable tools for forest management. Sustainable Development Goal (SDG) 15 aims to "protect, restore and promote sustainable use of terrestrial ecosystems, sustainably manage forests, combat desertification, and halt and reverse land degradation and halt biodiversity loss.

Monitoring systems provide real-time data on fire occurrences and environmental conditions that may lead to fires, such as high temperatures, low humidity, and the presence of dry vegetation. These systems use a range of technologies, including satellite imagery, remote sensing, weather data, and ground-based sensors, to track fire dynamics and environmental conditions. Forecasting, on the other hand, aims to predict the likelihood of fire events in specific regions based on historical data, environmental conditions, and human activities. This predictive capability is essential for proactive forest fire prevention and mitigation, enabling forest managers and authorities to allocate resources, implement controlled burns, or issue public warnings before fires start.

The prediction of forest fires, along with identifying their possible source, is significant in forest management, environmental conservation, and disaster preparedness. By not only predicting when and where a fire may occur but also determining the cause: whether it be human activity, natural factors like lightning, or equipment failure: stakeholders can implement more precise and effective prevention and mitigation strategies. For instance, if a fire is predicted to result from human activities, authorities can enforce stricter regulations, issue warnings, or increase patrols in high-risk areas, thereby reducing the chances of ignition. Similarly, understanding whether a fire is likely caused by natural events allows firefighting resources to be deployed in advance to mitigate damage. Knowing the source of a fire allows for tailored response strategies.

Existing approaches struggle to handle data that comes in at varying spatial and temporal resolutions. For instance, some models may perform well with high-resolution satellite data but poorly with coarse meteorological data. Many current fire forecasting models lack the ability to adjust predictions in real time as new data becomes available, limiting their practical use in rapidly changing scenarios such as active fire events. Phenological and environmental changes, such as seasonal vegetation cycles or the impacts of climate change, cause shifts in the feature space, which can degrade the accuracy of machine learning models over time. Most current approaches do not account for such shifts, requiring frequent retraining or manual recalibration. Many existing models focus on predicting where and when a fire might occur, without delving into the likely causes of the fire. This leaves a critical gap in understanding the underlying factors driving fire events, which is crucial for targeted mitigation strategies.

Thus, multi-layered approaches that can integrate diverse data sources, adjust dynamically to shifts in environmental conditions, and provide deeper insights into fire causality need to be explored for developing fire prediction systems. Ensemble models in machine learning are a good solution to address such variations in input as ensemble models combines predictions from multiple individual models trained individually.

However, to handle uncertainty and variability in incoming data that is analyzed for fire prediction, existing ensemble techniques need to be further enhanced to improve fire prediction accuracy.

SUMMARY

Embodiments of the present disclosure present technological improvements as solutions to one or more of the above-mentioned technical problems recognized by the inventors in conventional systems.

For example, in one embodiment, a method for dynamic forest fire and source prediction using dynamic weighting-based ensemble modeling and probabilistic cause determination is provided.

The method includes receiving input data for a region of interest (ROI) from a plurality of sources, the input data having a mix of a plurality of attributes, and determining a temporal resolution and a spatial resolution of the input data based on associated metadata of the input data.

Further, the method includes computing a data quality score of the input data for each pretrained base model from among a plurality of pretrained base models of dynamic weighting-based ensemble modeling approach. The data quality score is determined based on similarity between training data used for the pretrained base models and the input data in context of a set of attributes from among the plurality of attributes, the temporal resolution, and the spatial resolution of the training data and the input data.

Further, the method includes dynamically assigning a weight to each pretrained base model. The weight is obtained by applying a SoftMax function on the quality score determined for a pretrained base model from among the plurality of pretrained base models.

Furthermore, the method includes predicting by each pretrained base model an individual fire probability of the ROI by processing the input data and predicting an overall fire probability in the ROI as a weighted combination of the individual fire probability and the assigned weight of each pretrained base model.

Furthermore, the method includes determining occurrence of a shift between a feature space of the input data from the feature space of the training data of each pretrained base model. The shift is identified from presence of a difference between distributions of a plurality of key features of the training data and the input data based on mean and standard deviation computed for the training data and the input data. Further, includes performing feature normalization adjustment to align input data to a baseline distribution of the training data to obtain aligned input data. Thereafter includes predicting by each pretrained base model the individual fire probability by processing the aligned input data.

Further, the method includes recalibrating the individual fire probability by applying a Prediction Correction Factor using one of a multiplicative and an additive approach, wherein the Prediction Correction Factor is a function of detected shifts in the mean and the standard deviation, and then predicting the overall fire probability of the ROI based on recalibrating the individual fire probability.

In another aspect, a system for dynamic forest fire and source prediction using dynamic weighting-based ensemble modeling and probabilistic cause determination is provided. The system comprises a memory storing instructions; one or more Input/Output (I/O) interfaces; and one or more hardware processors coupled to the memory via the one or more I/O interfaces, wherein the one or more hardware processors are configured by the instructions to receive input data for a region of interest (ROI) from a plurality of sources, the input data having a mix of a plurality of attributes, and determining a temporal resolution and a spatial resolution of the input data based on associated metadata of the input data.

Further, the one or more hardware processors are configured to compute a data quality score of the input data for each pretrained base model from among a plurality of pretrained base models of dynamic weighting-based ensemble modeling approach. The data quality score is determined based on similarity between training data used for the pretrained base models and the input data in context of a set of attributes from among the plurality of attributes, the temporal resolution, and the spatial resolution of the training data and the input data.

Further, the one or more hardware processors are configured to dynamically assign a weight to each pretrained base model. The weight is obtained by applying a SoftMax function on the quality score determined for a pretrained base model from among the plurality of pretrained base models.

Furthermore, the one or more hardware processors are configured to predict by each pretrained base model an individual fire probability of the ROI by processing the input data and predicting an overall fire probability in the ROI as a weighted combination of the individual fire probability and the assigned weight of each pretrained base model.

Furthermore, the one or more hardware processors are configured to determine occurrence of a shift between a feature space of the input data from the feature space of the training data of each pretrained base model. The shift is identified from presence of a difference between distributions of a plurality of key features of the training data and the input data based on mean and standard deviation computed for the training data and the input data. Further, includes performing feature normalization adjustment to align input data to a baseline distribution of the training data to obtain aligned input data. Thereafter includes predicting by each pretrained base model the individual fire probability by processing the aligned input data.

Further, the one or more hardware processors are configured to recalibrate the individual fire probability by applying a Prediction Correction Factor using one of a multiplicative and an additive approach, wherein the Prediction Correction Factor is a function of detected shifts in the mean and the standard deviation, and then predicting the overall fire probability of the ROI based on recalibrating the individual fire probability.

In yet another aspect, there are provided one or more non-transitory machine-readable information storage mediums comprising one or more instructions, which when executed by one or more hardware processors cause: receiving input data for a region of interest (ROI) from a plurality of sources, the input data having a mix of a plurality of attributes; determining a temporal resolution and a spatial resolution of the input data based on associated metadata of the input data; computing a data quality score of the input data for each pretrained base model from among a plurality of pretrained base models of a dynamic weighting-based ensemble modeling approach, wherein the data quality score is determined based on similarity between a training data used for training each pretrained base model and the input data in context of a set of attributes from among the plurality of attributes, the temporal resolution, and the spatial resolution, of the training data and the input data; dynamically assigning a weight to each pretrained base model, wherein the weight is obtained by applying a SoftMax function on the data quality score determined for each pretrained base models; predicting by each pretrained base model executed by the one or more hardware processors, an individual fire probability of the ROI by processing the input data; and predicting an overall fire probability in the ROI as a weighted combination of the individual fire probability and the assigned weight of each pretrained base model.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 is an environment depicting a system deployed for fire prediction by analyzing dynamically acquired input data for a Region of Interest via a plurality of sources, in accordance with some embodiments of the present disclosure.
FIG. 2A depicts the system for the dynamic forest fire prediction and source prediction using dynamic weighting-based ensemble modeling and probabilistic cause determination, in accordance with some embodiments of the present disclosure.
FIG. 2B illustrates the system process overview for the dynamic forest fire prediction and source prediction using dynamic weighting-based ensemble modeling and probabilistic cause determination, in accordance with some embodiments of the present disclosure.
FIG. 3 is a flow diagram illustrating a method for dynamic forest fire prediction and source prediction using dynamic weighting-based ensemble modeling and probabilistic cause determination, using the system depicted in FIG. 1A and 1B, in accordance with some embodiments of the present disclosure.
FIG. 4 depicts the dynamic weighting-based ensemble modeling and probabilistic cause determination approach, in accordance with some embodiments of the present disclosure.
FIG. 5 depicts the outputs of the forest fire predictions by the system at various stages, in accordance with some embodiments of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Ensemble models are explored for fire predictions for certain topographies such as forest where uncertainty in data, complexity of fire dynamics, and limited generalizability of single models is a technical challenge to be addressed.

Embodiments of the present disclosure provide a method and system for dynamic forest fire prediction and source prediction using dynamic weighting-based ensemble modeling and probabilistic cause determination. The weighting-based ensemble modeling can handle input data with varying spatial and temporal resolutions. The adaptive ensemble model dynamically re-weights multiple base models, each optimized for different data scales, to provide accurate predictions based on the granularity of incoming data. Further, the method enable adjusting fire predictions probabilities due to shifts in the feature space caused by phenological and environmental changes. Key environmental variables such as vegetation indices are continuously monitored for recalibrating model predictions using shift detection algorithms, ensuring long-term accuracy without frequent retraining.

Furthermore, probabilistic determination is applied for likely cause of forest fires, which integrates data from various sources, including weather patterns, human activities, and historical fire causes, to provide a nuanced, data-driven understanding of the factors contributing to fire outbreaks.

There have been attempts to use ensemble models for forest fire predictions, however the approaches have been using traditional ensemble modeling where multiple individual models are trained on the same set of input variables and outputs of those models are stacked together to gain better performance. One of the existing works uses spatial weighting on the samples (without changing the input data). The Locally weighted learning (LWL) is applied to put spatial weights based on distance. However, this does not guarantee generalization ability of the models and does not handle the data with new characteristics. Whereas the dynamic weighting-based ensemble modeling approach used by the method and system disclosed herein trains the base models each with different set of input variables with varying spatial and temporal characteristics to improve the generalization ability of the models.

The existing method in literature focusses on spatial weighting of the training samples (not models) improving localized predictions but does not address temporal variability or changing environmental conditions. However, the method disclosed herein incorporates temporal adaptability, adjusting predictions based on seasonal cycles, vegetation phenology, and short-term weather fluctuations, ensuring more accurate and time-relevant predictions.

Furthermore, the weighting mechanism used in existing method has fixed spatial weights to the training samples, whereas the method herein employs a dynamic weighting mechanism that recalibrates model contributions in real time based on data quality and resolution. This allows to prioritize high-resolution data when available or rely on robust lower-resolution models in data-scarce conditions.

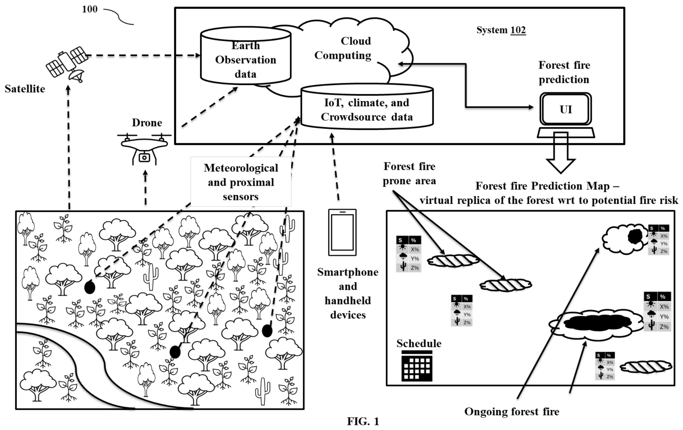

Referring now to the drawings, and more particularly to FIGS. 1 through 5, where similar reference characters denote corresponding features consistently throughout the figures, there are shown preferred embodiments, and these embodiments are described in the context of the following exemplary system and/or method.

FIG. 1 is an environment 100 depicting a system 102 deployed for fire prediction by analyzing dynamically acquired input data for a Region of Interest (ROI) via a plurality of sources, in accordance with some embodiments of the present disclosure.

In an example implementation the system 102 is a cloud-based system that integrates ensemble models, dynamic weighting, and feature shift adjustments. The system comprises a Data Acquisition System (DAS) (not shown) to collect real-time satellite, sensor, and weather data via a plurality of sources such as satellites, hand held devices, mobiles, drones, and sensors deployed on field (ROI- for example a forest land). A dashboard interface for visualizing fire risks and model outputs is provided and can be observed via edge devices, end user systems by interested users. An automated model updating system uses continuous integration/continuous delivery (CI/CD) system for retraining models as new data becomes available. Edge Computing Systems at the edge (such as in forested ROI) perform initial data processing of data acquired by on field sensors before transmitting to the system or central servers of the cloud based system for fire predictions.

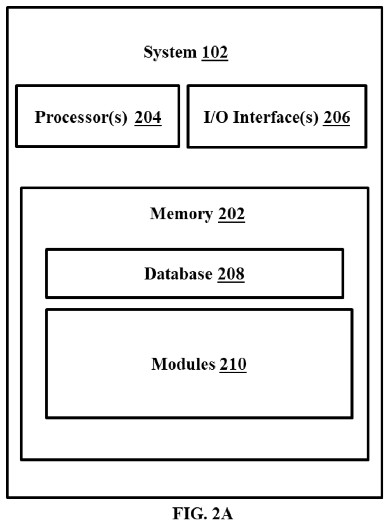

Databases such as Satellite Imagery Databases from sources like MODIS, Landsat, and Sentinel for time-series remote sensing data, Weather and Climate Databases such as OpenWeatherMap, NOAA datasets for meteorological data, Historical Fire Incident Databases such as National Interagency Fire Center (NIFC), Global Fire Emissions Database (GFED), Environmental and Vegetation Database such as Vegetation index databases like NDVI, GPP, LAI, as well as forest type databases, and Human Activity Databases providing data on human activity like construction, camping, or controlled burns for probabilistic fire cause modeling are used to source the input data along with on-field sensor data FIG. 2A depicts the system 102 for the fire prediction and source prediction using dynamic weighting-based ensemble modeling and probabilistic cause determination, in accordance with some embodiments of the present disclosure.

In an embodiment, the system 102 includes a processor(s) 204, communication interface device(s), alternatively referred as input/output (I/O) interface(s) 206, and one or more data storage devices or a memory 202 operatively coupled to the processor(s) 204. The system 102 with one or more hardware processors is configured to execute functions of one or more functional blocks of the system 102.

Referring to the components of system 102, in an embodiment, the processor(s) 204, can be one or more hardware processors 204. In an embodiment, the one or more hardware processors 204 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 204 are configured to fetch and execute computer-readable instructions stored in the memory 202. In an embodiment, the system 102 can be implemented in a variety of computing systems including laptop computers, notebooks, hand-held devices such as mobile phones, workstations, mainframe computers, cloud servers, and the like.

The I/O interface(s) 206 can include a variety of software and hardware interfaces, for example, a web interface, a graphical user interface and the like and can facilitate multiple communications within a wide variety of networks N/W and protocol types, including wired networks, for example, LAN, cable, etc., and wireless networks, such as WLAN, cellular and the like. In an embodiment, the I/O interface (s) 206 can include one or more ports for connecting to a number of external devices or to another server or devices.

The memory 202 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

In an embodiment, the memory 202 includes a plurality of modules 210. For example, the plurality of modules include Ensemble Models (not shown) which are combination of machine learning models such as Random Forests, Gradient Boosting Machines, CNNs, LSTMs. A dynamic Weighting Mechanism (not shown), which is an algorithm to dynamically adjust model weights based on the resolution and context of incoming data. A real-time adaptation algorithm (not shown) for adjusting predictions based on real-time data inputs (spatial and temporal). A feature space shift detection module (not shown) comprising techniques for detecting phenological and environmental shifts in feature distributions. A probabilistic modeling (not shown) which uses Bayesian networks or probabilistic graphical models to predict fire causes. Data Fusion modules (not shown) with techniques for combining satellite, weather, historical, and sensor data to improve prediction accuracy. Model Calibration and Adjustment module (not shown) for recalibrating models based on environmental changes or incoming real-time data.

Further, the modules (not shown) may include a Time-Series Analysis Algorithms for Exponential Moving Average (EMA), trend decomposition, ARIMA, LSTM for temporal data. A Geospatial Analysis Algorithms for handling spatial data such as spatial interpolation, kriging, spatial correlation. Supervised and Unsupervised Learning modules such as decision trees, Random Forests, Support Vector Machines, K-Means for classification and clustering of fire risk and Bayesian Networks: For probabilistic fire cause attribution.

The modules (not shown) also include Real-Time Data Processing Algorithms for integrating and processing real-time data streams and Optimization Algorithms such as Gradient Descent, Genetic Algorithms for optimizing ensemble model weights and parameters.

Further, the plurality of modules 210 include programs or coded instructions that supplement applications or functions performed by the system 102 for executing different steps involved in the process of fire prediction and source/cause prediction, being performed by the system 102. The plurality of modules 210, amongst other things, can include routines, programs, objects, components, and data structures, which performs particular tasks or implement particular abstract data types. The plurality of modules 210 may also be used as, signal processor(s), node machine(s), logic circuitries, and/or any other device or component that manipulates signals based on operational instructions. Further, the plurality of modules 210 can be used by hardware, by computer-readable instructions executed by the one or more hardware processors 104, or by a combination thereof. The plurality of modules 210 can include various sub-modules (not shown).

Further, the memory 202 may comprise information pertaining to input(s)/output(s) of each step performed by the processor(s) 104 of the system 102 and methods of the present disclosure2

Further, the memory 202 includes a database 208. The database (or repository) 208 may include a plurality of abstracted pieces of code for refinement and data that is processed, received, or generated as a result of the execution of the plurality of modules in the module(s) 210.

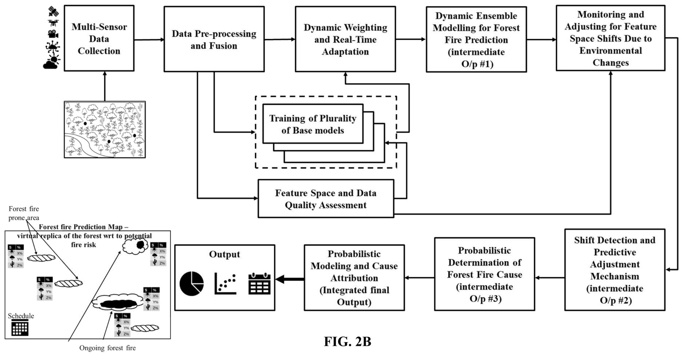

Although the database 208 is shown internal to the system 102, it will be noted that, in alternate embodiments, the database 208 can also be implemented external to the system 102, and communicatively coupled to the system 102. The data contained within such external database may be periodically updated. For example, new data may be added into the database (not shown in FIG. 2A) and/or existing data may be modified and/or non-useful data may be deleted from the database. In one example, the data may be stored in an external system, such as a Lightweight Directory Access Protocol (LDAP) directory and a Relational Database Management System (RDBMS). Data sourced by the system 102 from various external data sources/ databased for the ROI of forest area can be stored in the database 208. Functions of the components of the system 102 are now explained with reference to steps in flow diagrams in FIG. 2B through FIG. 5.

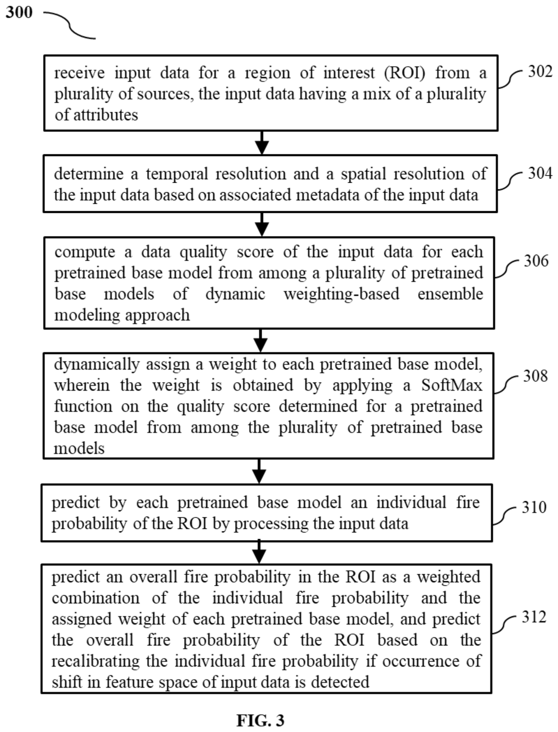

FIG. 2B illustrates the system process overview for the dynamic forest fire prediction and source prediction using dynamic weighting-based ensemble modeling and probabilistic cause determination, in accordance with some embodiments of the present disclosure. FIG. 2B is better understood in conjunction with a method 300 explained in FIG. 3.

FIG. 3 is a flow diagram illustrating the method 300 for dynamic forest fire prediction and source prediction using dynamic weighting-based ensemble modeling and probabilistic cause determination, using the system depicted in FIG. 1A and 1B, in accordance with some embodiments of the present disclosure.

In an embodiment, the system 102 comprises one or more data storage devices or the memory 202 operatively coupled to the processor(s) 204 and is configured to store instructions for execution of steps of the method 300 by the processor(s) or one or more hardware processors 204. The steps of the method 300 of the present disclosure will now be explained with reference to the components or blocks of the system 102 as depicted in FIG. 1 and the steps of flow diagram as depicted in FIG. 3. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

Referring to the steps of the method 300, at step 302 of the method 300, the one or more hardware processors 204 are configured by the instructions to receive input data for a region of interest (ROI) from a plurality of sources, the input data having a mix of a plurality of attributes with data from satellite images, sensor data, weather data. The region of interest typically is an area of interest of a forest land. As well understood in the data processing domain, the received data is pre-processed, wherein preprocessing includes adding missing time series data; applying data smoothing methods to reduce noise in the signal and highlight trends; harmonizing the special resolution of data and generating of feature vectors for each geographic point, which includes both dynamic (time-series indices) and static (geographical) variables obtained and subsequently used for modeling. As mentioned input data is time series data from variety of sources and combined or fused using standard modules such as the Data Acquisition System (DAS), which collects and combines real-time systems that collect satellite, sensor, and weather data.as mentioned in FIG. 2A. The steps of method 300 can be better understood with reference system process overview of FIG. 2B and a use case example.

At step 304 of the method 300, the one or more hardware processors 204 are configured by the instructions to determine a temporal resolution and a spatial resolution of the input data based on associated metadata of the input data. Each satellite image or observations comes with metadata files which include all the specifications such as spatial, temporal, spectral, radiometric resolutions, and all other sensors specific information (solar angle, azimuth, date and time of satellite overpass, sensor information, band information, etc.). Thus, the required information associated with received input data is extracted from the image metadata file.

At step 306 of the method 300, the one or more hardware processors 204 are configured by the instructions to compute a data quality score of the input data for each pretrained base model from among a plurality of pretrained base models of dynamic weighting-based ensemble modeling approach. The data quality score is determined based on similarity between training data used for the pretrained base models and the input data in context of a set of attributes from among the plurality of attributes, the temporal resolution, and the spatial resolution of the training data and the input data. $Q_i$ = f(match between temporal and spatial resolution of model and input data)

The data quality score $(Q_i)$ is computed using the equation 1

$$Q_i = \frac{1}{1+d_s+d_t} \qquad (1)$$

Wherein, ds is the spatial distance between the spatial resolution of the input data and the training data of each pretrained base model, and dt is the temporal distance between the temporal resolution of the input data and the training data of each pretrained base model.

Training of base models - The training of base models for forest fire prediction involves leveraging diverse datasets with varying spatial, temporal, and spectral resolutions. Each base model is specifically tailored to a particular data type, capturing unique aspects of fire occurrence. For instance, some models are trained on high-temporal-resolution meteorological data (e.g., daily temperature, humidity), while others utilize moderate-spatial-resolution vegetation indices (e.g., NDVI, NDWI) or static geospatial features like elevation and slope. Additionally, human activity data (e.g., proximity to settlements or industrial sites) may feed into separate models optimized for contextual analysis. Given these differences, the training process involves preprocessing and aligning the data to ensure compatibility for each model. Time-series models like LSTMs are trained on sequential datasets to capture temporal patterns, while Random Forest or Gradient Boosting models handle static or mixed-resolution data. The base models are trained independently using relevant subsets of data, with hyperparameter tuning and validation to optimize performance for their specific resolution and domain. By combining these models, each capturing distinct spatial, temporal, or spectral dynamics, the system ensures a comprehensive prediction framework that accounts for the heterogeneity of forest fire drivers.

At step 308 of the method 300, the one or more hardware processors 204 are configured by the instructions to dynamically assign a weight to each pretrained base model. Thee weight is obtained by applying a SoftMax function as in equation 2 on the data quality score determined for a pretrained base model from among the plurality of pretrained base models.

$$w_i = \frac{\exp(Q_i)}{\sum_j \exp(Q_j)} \qquad (2)$$

At step 310 of the method 300, the one or more hardware processors 204 are configured by the instructions to predict by each pretrained base model an individual fire probability ($P_iFire$) of the ROI by processing the input data.

At step 312 of the method 300, the one or more hardware processors 204 are configured by the instructions to predict an overall fire probability in the ROI as a weighted combination of the individual fire probability$P_iFire$ and the assigned weight $w_i$ of each pretrained base model.

$$P(Fire) = w_1 \cdot P_1(\text{Fire}) + w_2 \cdot P_2(Fire) + \cdots w_n \cdot P_n(Fire) \qquad (3)$$

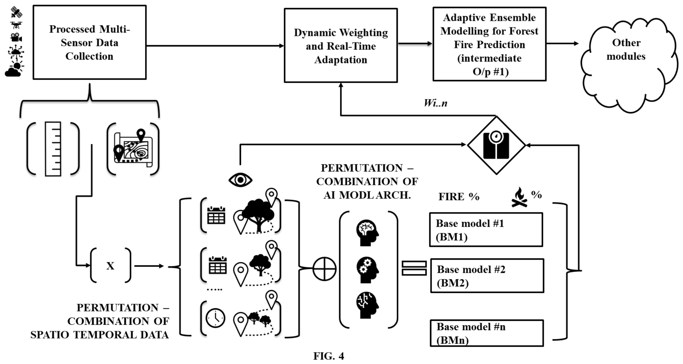

FIG. 4 depicts the dynamic weighting-based ensemble modeling and probabilistic cause determination approach, in accordance with some embodiments of the present disclosure. As depicted each base model prediction is weighed using equation 7, based on the data quality score computed for the collected multisensory data *Wi..n*. The final fire prediction. For the incoming data is weighted combination of predictions of each of the plurality of bas models in the ensemble modelling as in equation 3.

Further, at the next step of the method 300 the one or more hardware processors 204 are configured to provide adjustment to the predicted fire probability *P*(*Fire*) for any shift of feature space detected in the input data. The probability adjustment is computed as provided in steps below:

1. Determine occurrence of a shift between a feature space of the input data from the feature space of the training data of each pretrained base model. The shift is identified from presence of a difference between distributions of a plurality of key features of the training data and the input data based on mean and standard deviation computed for the training data and the input data.
2. Perform feature normalization adjustment to align input data to a baseline distribution of the training data to obtain aligned input data.
3. Predict by each pretrained base model the individual fire probability by processing the aligned input data.
4. Recalibrate the individual fire probability by applying a Prediction Correction Factor using one of a multiplicative and an additive approach. The Prediction Correction Factor is a function of detected shifts in the mean and the standard deviation $f(\triangle \mu, \Delta \sigma)$..
5. Predicting the overall fire probability ($P_{adjusted}$(*Fire*))of the ROI based on recalibrating the individual fire probability using equation 3.

$$P_{adjusted}(Fire) = P_{original}(Fire) + f(\triangle \mu, \triangle \sigma) \qquad (4)$$

where *f* is a function of the detected shifts in mean and standard deviation, e.g., a linear function $f(\triangle \mu) = k \cdot \triangle \mu$ with scaling factor k determined during calibration, k is determined by analyzing the relationship between the observed shifts in NDVI statistics ($\triangle \mu$ and $\triangle \sigma$) and the corresponding changes in the model's performance metrics (e.g., AUC, accuracy, or prediction error). A regression-based approach, such as ordinary least squares (OLS), or optimization techniques, such as grid search or Bayesian optimization, can be used to fit such that the adjusted predictions minimize the overall error. This ensures that the correction factor is systematically tuned to maintain prediction reliability despite shifts in data distributions.

This mechanism for adjusting the predicted fire probability addresses changes in environmental or data distribution shifts, such as seasonal variations or sensor-specific deviations, without requiring retraining or structural modifications to the model. By recalibrating predictions based on observed shifts in key statistical parameters like mean and standard deviation, it ensures the model remains robust and adaptive to changing conditions. This approach reduces computational overhead, avoids the complexity of model-level changes, and maintains prediction accuracy by dynamically aligning the outputs with the updated data distribution.

Further, at the next step of the method 300 the one or more hardware processors are configured to predict cause of fire by processing the input data via a Bayesian model where each possible cause of fire is treated as a hypothesis. The prior probabilities are assigned to each cause-hypothesis based on historical frequencies of fire causes under similar environmental conditions. The conditional probabilities that relate specific environmental and contextual indicators to each fire cause hypothesis are defined.

USE CASE ILLUSTRATIVE EXAMPLE:

Step 1.1: Define Input Characteristics for the input data

- Temporal Resolution: 8 days
- Spatial Resolution: 500 meters

Pretrained Base Models (also referred to as base models or simply models hereinafter) Available:

Model 1: Trained on daily, 250-meter resolution data.
Model 2: Trained on monthly, 1-kilometer resolution data.

Step 1.2 Calculation of Data Quality Scores - Assessment of how well training data of each pretrained base model matches the incoming data characteristics.
Assign scores ($Q_i$) to each model based on the closeness of its training data resolution to the incoming data:

$Q_i$ = f(match between temporal and spatial resolution of model and incoming data)
Base Model 1:

- Temporal closeness: Daily data closely matches 8-day data.
- Spatial closeness: 250m data closely matches 500m data.
- Q1 = 0.8

Base Model 2:

- Temporal closeness: Monthly data is less aligned with 8-day data.
- Spatial closeness: 1km data is less aligned with 500m data.
- Q2 = 0.5

Step 1.3: Computation of Dynamic Weights Using Softmax - Conversion of quality scores into normalized weights using the Softmax function: using $w_i = \frac{\exp(Q_i)}{\sum_j \exp(Q_j)}$ of equation 2.

$$w_1 = \frac{\exp(0.8)}{\exp(0.8) + \exp(0.5)} = 0.57 \; and \; w_2 = \frac{\exp(0.5)}{\exp(0.8) + \exp(0.5)}$$
$$= 0.43$$

Step 1.4: Generate Predictions from Base Models

- **Predictions for Each Model:**

- Model 1 outputs $P_1(Fire)$ = 0.7
- Model 2 outputs $P_2(Fire)$ = 0.5

Step 1.5: Combine Predictions Using Dynamic Weights
Final Prediction Formula: Combine weighted predictions from both models:

$$P(Fire) = w_1 \cdot P_1(Fire) + w_2 \cdot P_2(Fire)$$

as in equation 3.
Model 1 has a stronger influence on the final prediction due to its closer match to the incoming data characteristics. Model 2, while contributing less, adds value by incorporating broader-scale patterns.
Real-World Scenario - Suppose a forest region prone to fires is being monitored during a dry season

- The incoming data reflects high vegetation dryness and rising temperatures captured at 8-day intervals with 500m resolution.
- Model 1, trained on high-frequency data, high-resolution data: emphasizes short-term fire risks.
- Model 2, trained on lower-frequency data, broader-scale data: provides a broader context, accounting for cumulative risk factors like seasonal drought.

- **Adjust Model Predictions Due to Shifts in the Feature Space Caused by Phenological and Environmental Changes:** To maintain the accuracy and robustness of the model predictions despite environmental changes (e.g., seasonal vegetation growth or climate variability) that can lead to shifts in the feature space.

2.1. Feature Monitoring: Tracking of the statistical distributions of key features in incoming data (e.g., NDVI, temperature, precipitation).
2.2. Shift Detection: Quantifying deviations between the current feature distributions and those of the training data using statistical tests.
2.3. Adjustment Mechanism: Applying transformation functions to adjust the features or model predictions, ensuring they align with the current environment.
Step 2.1: Feature Monitoring and Baseline Comparison

1. Baseline Distributions: When the model is trained, the distribution of each key feature (e.g., NDVI, temperature) can be captured in the training dataset. These distributions are represented by their probability density functions (PDFs), mean, and variance.

Let $X_t$ represent a feature (e.g., NDVI) at time t in the training data. The baseline parameters: $\mu_{train}$ (mean) and $\sigma_{train}$ (standard deviation) can be defined for $X_t$

2. Current Data Distribution: For each incoming batch of input data, calculate the current mean $\mu_{current}$ and standard deviation $\sigma_{current}$ for the same feature $X_t$

3. Tracking Key Feature Statistics: Monitoring of these statistics by maintaining a running window (e.g., 30 days), which provides a recent view of feature behavior

Step 2.2: Shift Detection using Statistical Tests - To detect significant shifts, statistical tests like the Kullback-Leibler (KL) divergence or the Kolmogorov-Smirnov (KS) test are used.

1. Kullback-Leibler Divergence: Measures how one probability distribution diverges from a second reference distribution (in this case, the baseline).

$$D_{KL}(P_{train} \parallel P_{current}) = \sum_x P_{train}(x) \log \frac{P_{train}(x)}{P_{current}(x)} \qquad (5)$$

If $D_{KL}$ exceeds a threshold $\partial_{KL}$, a shift is detected.

2. Kolmogorov-Smirnov Test: A non-parametric test comparing the cumulative distribution functions (CDFs) of two samples (training and current data) for feature.

$$D = \sup_x | F_{train}(x) - F_{current}(x) | \qquad (6)$$

If $D$ exceeds a critical value $\alpha$ (based on significance level), it indicates a significant shift in the feature distribution.

3. Example Calculation:

- Suppose $X_t$ (NDVI) has a baseline mean $\mu_{train}$ = 0.5 and $\sigma_{train}$ = 0.1
- Incoming data shows $\mu_{train}$ = 0.65 and $\sigma_{train}$ = 0.12
- Applying the KL divergence formula yields $D_{KL}$ = 0.02, which might exceed the threshold and indicate a shift.

Step 2.3: Adjustment Mechanism - Upon detecting a significant shift, the system can adjust the features or model predictions using the following ways 1. Feature Normalization Adjustment - If $\mu_{current}$ and $\sigma_{current}$ have deviated from baseline values, the incoming feature values can be standardized using the baseline statistics:

$$X_{adjusted} = \frac{X_{current} - \mu_{current}}{\sigma_{Current}} \cdot \sigma_{train} + \mu_{train} \qquad (7)$$

This normalization aligns current data to the baseline distribution, effectively adjusting for seasonal effects or other shifts.

2. Prediction Correction Factor: For a simpler correction as an example, an additive or multiplicative factor can be applied to the model's predicted probabilities based on detected shifts:

$$P_{adjusted}(Fire) = P_{original}(Fire) + f(\triangle \mu, \triangle \sigma) \qquad \text{(from equation 4)}$$

where $f$ is a function of the detected shifts in mean and standard deviation, e.g., a linear function $f(\triangle \mu) = k \cdot \triangle \mu$ with scaling factor $k$ determined during calibration.

Demonstration Example - Suppose the system monitors NDVI values over time. The baseline statistics for NDVI are:

Training Mean $\mu_{train}$ = 0.5
Training Standard Deviation $\sigma_{train}$ = 0.1
Scenario: A seasonal change occurs, and the NDVI values in incoming data show an increase with:

Current Mean $\mu_{current}$ = 0.7
Current Standard Deviation $\sigma_{current}$ = 0.15

1. Shift Detection: Compute $D_{KL}$ *and D (KS test).* Assume the KL divergence $D_{KL}$ = 0.03 exceeds threshold $\partial_{KL}$ = 0.02, confirming a shift.

2. Feature Normalization Adjustment: Each NDVI value $X_{current}$ can be adjusted in the new data to align it with the baseline:

$$X_{\text{adjusted}} = \frac{X_{\text{current}} - 0.7}{0.15} \cdot 0.1 + 0.5$$

- For an incoming NDVI value of $X_{current}$ = 0.75:

$$X_{\text{adjusted}} = \frac{0.75 - 0.7}{0.15} \cdot 0.1 + 0.5 = 0.533$$

- This adjusted value $X_{\text{adjusted}}$ = 0.533 , now aligns better with the baseline.

3. Prediction Correction Factor: Alternatively, apply an additive correction to the predicted probability:

$$P_{\text{adjusted}}(\text{Fire}) = P_{original}(Fire) + 0.1 \cdot (0.7 - 0.5)$$

If $P_{original}(Fire) = 0.4$ , then: $P_{adjusted}(Fire) = 0.4 + 0.1 \cdot 0.2 = 0.42$

In this step, the shifts in environmental data distributions and applied adjustments are detected to maintain prediction accuracy. By monitoring feature distributions and implementing either normalization or prediction corrections, the system adapts to real-time environmental shifts, minimizing the need for frequent retraining. This approach enhances both efficiency and robustness in dynamic forest environments.

**Probabilistic determination of fire cause:** Aim is to determine the cause of a forest fire using based on environmental factors, proximity to human activities, and historical data. The method employs Bayesian Inference to calculate the likelihood of different fire causes and predict the most probable one. Scenario - A forest fire is observed in a region with the following attributes:

A. Environmental Factors: Variables such as temperature, humidity, wind speed, and vegetation dryness, which influence fire ignition and spread.

Temperature: 38°C
Humidity: 25%
Wind Speed: 18 km/h
Vegetation Dryness: High

B. Proximity to Potential Human Causes: Indicators of human activity in the area, such as settlements or industrial sites, which can trigger fires.

Settlements: 1 km
Industrial Sites: 2 km
Recreational Activity: Low

C. Historical Data: The percentage of fires caused in similar regions from past records.

Lightning: 60% of past fire causes.
Human Activity: 30% of past fire causes.
Equipment Malfunction: 10% of past fire causes.
Step-by-Step Approach

3.1. Collection and Data preprocessing - Data from environmental, proximity, and historical sources is normalized for uniform comparison across variables.

Table 1

| Factor | Value | Normalized Score (0-1) |
|---|---|---|
| Temperature | $38^0$ C | 0.9 |
| Humidity | 25 % | 0.2 |
| Wind speed | 18 km/h | 0.6 |
| Vegetation dryness | High | 1.0 |
| Proximity to settlement | 1 km | 0.8 |
| Proximity to industrial sites | 2 km | 0.6 |
| Recreational activity | Low | 0.3 |

**3.2. Define the Bayesian Model** - Bayesian Inference calculates the probability of each fire cause () given the data, using:

$$P(H_i \mid \text{data}) = \frac{P(data|H_i|) \cdot P(H_i)}{P(data)}$$

Where,

$P(H_i)$: The prior probability (based on historical data).
$P(data \mid H_i|)$: Likelihood of the observed data given the cause $H_i$.
$P(data)$: Evidence (normalizing constant to ensure probabilities sum to 1).
The method disclosed combines prior knowledge with new observations to update beliefs about the cause.

**3.3. Assign Prior Probabilities**

Based on historical data, the following probabilities are assigned to each fire cause:

- *P(Lightning)* = 0.6
- *P(Human Activity)* = 0.3
- *P(Equipment Malfunction)* = 0.1

These represent the baseline probabilities of each cause before considering the new data.
**3.4. Define Likelihoods** - Likelihoods represent the compatibility of observed data with each fire cause, based on expert knowledge or past patterns.

*A. For Lightning:*

- High vegetation dryness: 1.0

- Moderate wind speed: 0.6

- Low human activity: 0.3

$$\text{Likelihood} = 1.0 \text{ x } 0.6 \text{ x } 0.3 = 0.18$$

*B. For Human Activity:*

- Proximity to settlements: 0.8

- Proximity to industrial sites: 0.6

$$\text{Likelihood} = 0.8 \text{ x } 0.6 = 0.48$$

**C. For Equipment Malfunction:**

Proximity to industrial sites: 0.6

Likelihood = 0.6

These values quantify how likely the observed data is under each hypothesis.

**3.5. Calculation of Posterior Probabilities** - The posterior probability for each cause is calculated using Bayes' Theorem:

**A. For Lightning:**

$$P(\text{Lightning} \mid \text{data}) = \frac{(0.18) \cdot (0.6)}{(0.18 \cdot 0.6) + (0.48 \cdot 0.3) + (0.6 \cdot 0.1)}$$

$$= \frac{0.108}{0.108 + 0.144 + 0.06} = \frac{0.108}{0.312} = 0.346$$

**B. For Human Activity:**

$$P(\text{Human Activity} \mid \text{data}) = \frac{(0.48) \cdot (0.3)}{(0.18 \cdot 0.6) + (0.48 \cdot 0.3) + (0.6 \cdot 0.1)}$$

$$= \frac{0.144}{0.312} = 0.462$$

**C. For Equipment Malfunction:**

$$P(\text{Equipment Malfunction} \mid \text{data}) = \frac{(0.6) \cdot (0.1)}{(0.18 \cdot 0.6) + (0.48 \cdot 0.3) + (0.6 \cdot 0.1)}$$

$$= \frac{0.06}{0.312} = 0.192$$

The posterior probabilities indicate the likelihood of each cause given the observed data:

- Human Activity: 46.2
- Lightning: 34.6
- Equipment Malfunction: 19.2

**Prediction: The most likely cause of the fire is Human Activity, with a probability of 46.2.**

The use case example demonstrates how Bayesian Inference integrates prior knowledge, observed data, and expert-defined likelihoods to predict the most probable cause of a forest fire.

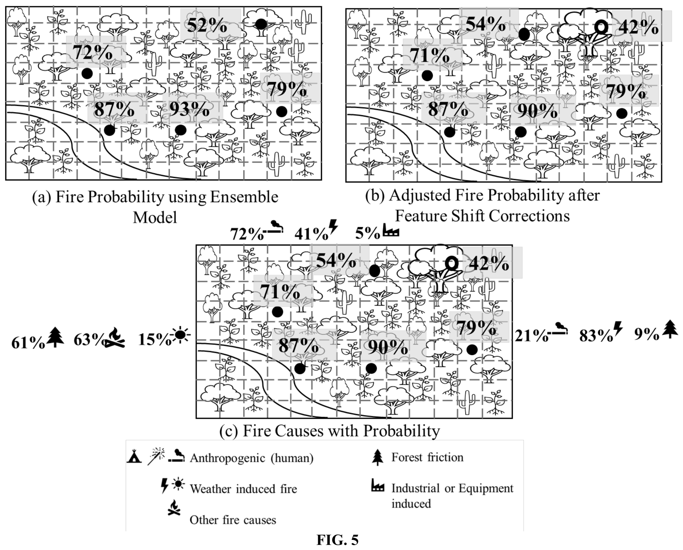

FIG. 5 depicts the outputs of the forest fire prediction system at various stages. FIG. 5- sketch (a) depicts the fire probability map generated using the ensemble modeling approach, highlighting areas with varying fire risks. FIG. 5 sketch (b) represents the adjusted fire probability map after incorporating feature shift corrections, demonstrating the model's ability to adapt to changes in data distributions or environmental conditions. FIG. 5 sketch (c) showcases the prediction of potential fire causes, assigning individual probabilities to anthropogenic (human-induced), weather-induced, industrial or equipment-induced fires, and other causes.

Thus the method and system disclosed herein enables an approach to dynamically adjusting model weights based on varying spatial and temporal unlike uniform weights or predefined importance across data sources, which is inefficient in real-world, large-scale applications. The system 102 herein is a scalable system that intelligently adjusts model behavior based on data resolution without manual intervention. This is done using deep integration of statistical learning methods and real-time data processing that existing methods hardly address.

Further, the method introduces feature space shift detection and the ability to recalibrate the model based on environmental or phenological changes. Conventional methods that may attempt to model static conditions, the method disclosed real-time adaptability to both environmental changes and data shifts represents a significant leap in predictive accuracy.

Furthermore, most existing fire prediction models focus only on the event occurrence. However, by predicting probable causes (human vs. environmental), the system disclosed offers a more holistic fire management tool. The dual-focus approach (both fire occurrence and cause) adds a technical layer of depth that existing methods lack, making the system predictions realistic, thus enabling better proactive measures for fire prevention with effective resource management. Thus, effectively the system provides economically significant solution for forest fire control mechanisms.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method (300) for fire prediction, comprising:

    receiving (302), via one or more hardware processors, input data for a region of interest (ROI) from a plurality of sources, the input data having a mix of a plurality of attributes;
    determining (304), via the one or more hardware processors, a temporal resolution and a spatial resolution of the input data based on associated metadata of the input data;
    computing (306), via the one or more hardware processors, a data quality score of the input data for each pretrained base model from among a plurality of pretrained base models of a dynamic weighting-based ensemble modeling approach, wherein the data quality score is determined based on similarity between a training data used for training each pretrained base model and the input data in context of a set of attributes from among the plurality of attributes, the temporal resolution, and the spatial resolution, of the training data and the input data;
    dynamically assigning (308), via the one or more hardware processors, a weight to each pretrained base model, wherein the weight is obtained by applying a SoftMax function on the data quality score determined for each of the plurality of pretrained base models;
    predicting (310), by each pretrained base model executed by the one or more hardware processors, an individual fire probability of the ROI by processing the input data; and
    predicting (312), via the one or more hardware processors, an overall fire probability in the ROI as a weighted combination of the individual fire probability and the assigned weight of each pretrained base model.

2. The processor implemented method as claimed in claim 1, wherein the method comprises:

    determining occurrence of a shift between a feature space of the input data from the feature space of the training data of each pretrained base model of the plurality of pretrained base models, wherein the shift is identified from presence of a difference between distributions of a plurality of key features of the training data and the input data based on mean and standard deviation computed for the training data and the input data;
    performing a feature normalization adjustment to align the input data to a baseline distribution of the training data to obtain an aligned input data;
    predicting by each pretrained base model the individual fire probability by processing the aligned input data;
    recalibrating the individual fire probability by applying a Prediction Correction Factor using one of a multiplicative and an additive approach, wherein the Prediction Correction Factor is a function of detected shifts in the mean and the standard deviation; and
    predicting the overall fire probability of the ROI based on the recalibrated individual fire probability.

3. The processor implemented method as claimed in claim 1, wherein the data quality score (Q1) is computed using the equation $Q_i = \frac{1}{1+d_s+d_t}$ , wherein

    $d_s$ is the spatial distance between the spatial resolution of the input data and the training data of each pretrained base model, and
    $d_t$ is the temporal distance between the temporal resolution of the input data and the training data of each pretrained base model.

4. The processor implemented method as claimed in claim 1, wherein the method comprises predicting cause of fire by processing the input data using a Bayesian model where each possible cause of fire is treated as a hypothesis,

wherein a plurality of prior probabilities are assigned to each cause-hypothesis based on historical frequencies of fire causes under similar environmental conditions, and

wherein one or more conditional probabilities that relate specific environmental and contextual indicators to each fire cause hypothesis are defined.

5. The processor implemented method as claimed in claim 1, wherein the input data is prepared for processing by using a plurality of preprocessing techniques.

6. A system (102) for fire prediction, the system comprising:

a memory (202) storing instructions;
one or more Input/Output (I/O) interfaces (206); and
one or more hardware processors (204) coupled to the memory (202) via the one or more I/O interfaces (206), wherein the one or more hardware processors (204) are configured by the instructions to:

receive input data for a region of interest (ROI) from a plurality of sources, the input data having a mix of a plurality of attributes;
determine a temporal resolution and a spatial resolution of the input data based on associated metadata of the input data;
compute a data quality score of the input data for each pretrained base model from among a plurality of pretrained base models of dynamic weighting-based ensemble modeling approach, wherein the data quality score is determined based on similarity between training data used for training each pretrained base model and the input data in context of a set of attributes from among the plurality of attributes, the temporal resolution, and the spatial resolution of the training data and the input data;
dynamically assign a weight to each pretrained base model, wherein the weight is obtained by applying a SoftMax function on the data quality score determined for each pretrained base model;
predict by each pretrained base model an individual fire probability of the ROI by processing the input data; and
predict an overall fire probability in the ROI as a weighted combination of the individual fire probability and the assigned weight of each pretrained base model.

7. The system as claimed in claim 6, wherein the one or more hardware processors (204) are configured to:

determine occurrence of a shift between a feature space of the input data from the feature space of the training data of each pretrained base model, wherein the shift is identified from presence of a difference between distributions of a plurality of key features of the training data and the input data based on mean and standard deviation computed for the training data and the input data;
perform feature normalization adjustment to align input data to a baseline distribution of the training data to obtain aligned input data;
predict by each pretrained base model the individual fire probability by processing the aligned input data;
recalibrate the individual fire probability by applying a Prediction Correction Factor using one of a multiplicative and an additive approach, wherein the Prediction Correction Factor is a function of detected shifts in the mean and the standard deviation; and
predict the overall fire probability of the ROI based on the recalibrated individual fire probability.

8. The system as claimed in claim 6, wherein the data quality score (Q1) is computed using the equation

$$Q_i = \frac{1}{1+d_s+d_t}$$ , wherein

$d_s$ is the spatial distance between the spatial resolution of the input data and the training data of each pretrained base model, and
$d_t$ is the temporal distance between the temporal resolution of the input data and the training data of each pretrained base model.

9. The system as claimed in claim 6, wherein the one or more hardware processors (204) are configured to predict cause of fire by processing the input data using a Bayesian model where each possible cause of fire is treated as a hypothesis,

wherein a plurality of prior probabilities are assigned to each cause-hypothesis based on historical frequencies of fire causes under similar environmental conditions, and

wherein one or more conditional probabilities that relate specific environmental and contextual indicators to each fire cause hypothesis are defined.

10. The system as claimed in claim 6, wherein the input data is prepared for processing by using a plurality of preprocessing techniques.

11. One or more non-transitory machine-readable information storage mediums comprising one or more instructions which when executed by one or more hardware processors cause:

receiving input data for a region of interest (ROI) from a plurality of sources, the input data having a mix of a plurality of attributes;

determining a temporal resolution and a spatial resolution of the input data based on associated metadata of the input data;

computing a data quality score of the input data for each pretrained base model from among a plurality of pretrained base models of a dynamic weighting-based ensemble modeling approach, wherein the data quality score is determined based on similarity between a training data used for training each pretrained base model and the input data in context of a set of attributes from among the plurality of attributes, the temporal resolution, and the spatial resolution, of the training data and the input data;

dynamically assigning a weight to each pretrained base model, wherein the weight is obtained by applying a SoftMax function on the data quality score determined for each of the plurality of pretrained base models;

predicting each pretrained base model executed by the one or more hardware processors, an individual fire probability of the ROI by processing the input data; and

predicting an overall fire probability in the ROI as a weighted combination of the individual fire probability and the assigned weight of each pretrained base model.

12. The one or more non-transitory machine-readable information storage mediums as claimed in claim 11, wherein the method comprises:

determining occurrence of a shift between a feature space of the input data from the feature space of the training data of each pretrained base model of the plurality of pretrained base models, wherein the shift is identified from presence of a difference between distributions of a plurality of key features of the training data and the input data based on mean and standard deviation computed for the training data and the input data;

performing a feature normalization adjustment to align the input data to a baseline distribution of the training data to obtain an aligned input data;

predicting by each pretrained base model the individual fire probability by processing the aligned input data;

recalibrating the individual fire probability by applying a Prediction Correction Factor using one of a multiplicative and an additive approach, wherein the Prediction Correction Factor is a function of detected shifts in the mean and the standard deviation; and

predicting the overall fire probability of the ROI based on the recalibrated individual fire probability.

13. The one or more non-transitory machine-readable information storage mediums as claimed in claim 11, wherein the data quality score (Q1) is computed using the equation $Q_i = \frac{1}{1+d_s+d_t}$, wherein

$d_s$ is the spatial distance between the spatial resolution of the input data and the training data of each pretrained base model, and

$d_t$ is the temporal distance between the temporal resolution of the input data and the training data of each pretrained base model.

14. The one or more non-transitory machine-readable information storage mediums as claimed in claim 11, wherein the method comprises predicting cause of fire by processing the input data using a Bayesian model where each possible cause of fire is treated as a hypothesis,

wherein a plurality of prior probabilities are assigned to each cause-hypothesis based on historical frequencies of fire causes under similar environmental conditions, and

wherein one or more conditional probabilities that relate specific environmental and contextual indicators to each fire cause hypothesis are defined.

15. The one or more non-transitory machine-readable information storage mediums as claimed in claim 11, wherein the input data is prepared for processing by using a plurality of preprocessing techniques.

100

System 102

Earth Observation data

Cloud Computing

IoT, climate, and Crowdsource data

Forest fire prediction

UI

Satellite

Drone

Meteorological and proximal sensors

Smartphone and handheld devices

Forest fire prone area

Forest fire Prediction Map – virtual replica of the forest wrt to potential fire risk

S | %
X%
Y%
Z%

Schedule

Ongoing forest fire

FIG. 1

19

System 102

Processor(s) 204

I/O Interface(s) 206

Memory 202

Database 208

Modules 210

FIG. 2A

FIG. 2B

300

receive input data for a region of interest (ROI) from a plurality of sources, the input data having a mix of a plurality of attributes — 302

↓

determine a temporal resolution and a spatial resolution of the input data based on associated metadata of the input data — 304

↓

compute a data quality score of the input data for each pretrained base model from among a plurality of pretrained base models of dynamic weighting-based ensemble modeling approach — 306

↓

dynamically assign a weight to each pretrained base model, wherein the weight is obtained by applying a SoftMax function on the quality score determined for a pretrained base model from among the plurality of pretrained base models — 308

↓

predict by each pretrained base model an individual fire probability of the ROI by processing the input data — 310

↓

predict an overall fire probability in the ROI as a weighted combination of the individual fire probability and the assigned weight of each pretrained base model, and predict the overall fire probability of the ROI based on the recalibrating the individual fire probability if occurrence of shift in feature space of input data is detected — 312

**FIG. 3**

Processed Multi-Sensor Data Collection

Dynamic Weighting and Real-Time Adaptation

Adaptive Ensemble Modelling for Forest Fire Prediction (intermediate O/p #1)

Other modules

$Wi..n$

X

PERMUTATION – COMBINATION OF SPATIO TEMPORAL DATA

PERMUTATION – COMBINATION OF AI MODL ARCH.

FIRE %

%

Base model #1 (BM1)

Base model #2 (BM2)

Base model #n (BMn)

FIG. 4

23

(a) Fire Probability using Ensemble Model

(b) Adjusted Fire Probability after Feature Shift Corrections

(c) Fire Causes with Probability

**FIG. 5**

Europäisches Patentamt

European Patent Office

Office européen des brevets

# EUROPEAN SEARCH REPORT

Application Number

EP 25 22 1095

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MAHSA SALEHI ET AL: "Dynamic and Robust Wildfire Risk Prediction System", PROCEEDINGS OF THE 22ND ACM SIGKDD INTERNATIONAL CONFERENCE ON KNOWLEDGE DISCOVERY AND DATA MINING, KDD '16 ACM PRESS, NEW YORK, NEW YORK, USA, 13 August 2016 (2016-08-13), pages 245-254, XP058276814, DOI: 10.1145/2939672.2939685 ISBN: 9781450342322 * abstract; sections 3.1, 3.2, 3.2.1, 3.2.2, 3.2.3, 4 Equation 4 * | 1-15 | INV. G06N20/20 G06N7/01 |
| A | TEHRANY MAHYAT SHAFAPOUR ET AL: "A novel ensemble modeling approach for the spatial prediction of tropical forest fire susceptibility using LogitBoost machine learning classifier and multi-source geospatial data", THEORETICAL AND APPLIED CLIMATOLOGY XX, XX, vol. 137, no. 1, 11 September 2018 (2018-09-11), pages 637-653, XP036832326, ISSN: 0177-798X, DOI: 10.1007/S00704-018-2628-9 [retrieved on 2018-09-11] * abstract; sections 2, 3, 4, 5 * | 1-15 | |
| | -/-- | | TECHNICAL FIELDS SEARCHED (IPC) G06N |

The present search report has been drawn up for all claims

| Place of search | Date of completion of the search | Examiner |
|---|---|---|
| The Hague | 23 April 2026 | Tebbal Barracosa, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

| | Europäisches Patentamt European Patent Office Office européen des brevets | **EUROPEAN SEARCH REPORT** | Application Number EP 25 22 1095 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SARKAR MRIGANKA SHEKHAR ET AL: "Ensembling machine learning models to identify forest fire-susceptible zones in Northeast India", ECOLOGICAL INFORMATICS, [Online] vol. 81, 18 April 2024 (2024-04-18), page 102598, XP093391006, NL ISSN: 1574-9541, DOI: 10.1016/j.ecoinf.2024.102598 Retrieved from the Internet: URL:https://www.sciencedirect.com/science/article/pii/S1574954124001407> [retrieved on 2026-04-23] * abstract; sections 2.5, 3; figure 2 * ----- | 1-15 | |

TECHNICAL FIELDS SEARCHED (IPC)

The present search report has been drawn up for all claims

| Place of search | Date of completion of the search | Examiner |
|---|---|---|
| The Hague | 23 April 2026 | Tebbal Barracosa, B |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202521001797